# EUROPEAN PATENT APPLICATION

(11) **EP 4 528 954 A1**
(43) Date of publication of application: **26.03.2025**
(21) Application number: 23211313.4
(22) Date of filing: 21.11.2023
(51) Int. Cl.: H02H 3/33, H02H 1/06, H02J 9/06

(54) **RESIDUAL CURRENT CIRCUIT BREAKER AND SYSTEM INCLUDING THE RESIDUAL CURRENT CIRCUIT BREAKER**

(30) Priority: 25.09.2023 CN 202311246967
(71) Applicant: Schneider Electric (China) Co., Ltd., Beijing 100102 (CN)
(72) Inventor: LIU, Jiawei, Shanghai 201203 (CN); CHEN, Jiamin, Shanghai 201203 (CN); ZHOU, Lei, Shanghai 201203 (CN); CHEN, Hui, Shanghai 201203 (CN); CUI, Xinwei, Shanghai 201203 (CN); FENG, Jie, Shanghai 201203 (CN); WANG, Han, Shanghai 201203 (CN); HU, Chunchao, Shanghai 201203 (CN)
(74) Representative: Manitz Finsterwald Patent- und Rechtsanwaltspartnerschaft mbB

(57) **Abstract**

A residual current circuit breaker and a system including the residual current circuit breaker are provided. The residual current circuit breaker includes: a first switch connected in series between a power supply of the residual current circuit breaker and a load; a second switch connected in series between a standby power supply and the load; and a control means that controls to open the first switch and close the second switch in response to a residual current of a main loop of the residual current circuit breaker exceeding a predetermined threshold, wherein a voltage of the standby power supply is higher than a lowest value of a voltage required for the load to operate and lower than a highest value of a safe voltage, and wherein the first switch and the second switch are mutually exclusive.

## Description

### TECHNICAL FIELD

The present disclosure relates to a residual current circuit breaker and a system for residual current protection which includes the residual current circuit breaker.

### BACKGROUND

A residual current circuit breaker (also known as leakage protection device) is a grounding protection device used to prevent accidents caused by electrical shock and leakage. When the residual current circuit breaker detects that the residual current (also called leakage current) in its main loop exceeds its setting value or people and/or animals get an electrical shock, the residual current circuit breaker can quickly perform tripping action to cut off the power supply associated with the fault, thus protecting the safety of people, animals and loads. However, in some application scenarios of the residual current circuit breaker, unexpected secondary accidents may occur due to the load's operation suddenly stops when the power supply is cut off with the tripping action of the residual current circuit breaker. For example, in the application scenario where the load is an illuminating device, the sudden stop of the illuminating device's operation may cause secondary accidents for pedestrians and vehicles. For another example, in an application scenario where the load is monitoring device, the sudden stop of the monitoring device's operation may result in missing out critical monitored information.

### SUMMARY

In view of the above scenarios, it is necessary to consider a solution that can meet requirements for the residual current protection while meeting the lowest requirements for the operation of the load to avoid secondary accidents. For example, in the application scenario where the residual current circuit breaker is used in an illuminating device, it is expected that this solution can not only prevent electrical shock accidents caused by the residual current, but also avoid traffic accidents caused by the illuminating device falling to illuminate completely.

An aspect of the present disclosure provides a residual current circuit breaker. The residual current circuit breaker includes: a first switch connected in series between a power supply of the residual current circuit breaker and a load; a second switch connected in series between a standby power supply and the load; and a control means that controls to open the first switch and close the second switch in response to residual current of a main loop of the residual current circuit breaker exceeding a predetermined threshold, wherein a voltage of the standby power supply is higher than a lowest value of a voltage required for the load to operate and lower than a highest value of a safe voltage, and wherein the first switch and the second switch are mutually exclusive.

Optionally, the standby power supply is located outside the residual current circuit breaker, and the residual current circuit breaker further comprises: an external interface for connecting to the standby power supply, and the second switch is connected between the external interface and the load.

Optionally, the standby power supply is located inside the residual current circuit breaker as a part of the residual current circuit breaker.

Optionally, the standby power supply is provided by a voltage converter, and an input terminal of the voltage converter is connected to an incoming terminal of the residual current circuit breaker to convert a voltage of the power supply into a voltage higher than the lowest value of the voltage required for the load to operate and lower than the highest value of the safe voltage, and the second switch is connected between an output terminal of the voltage converter and the load.

Optionally, the voltage converter performs conversion in response to receiving a trigger signal for triggering the voltage converter to perform the conversion.

Optionally, the first switch, the second switch and the control means are provided by a dual power switch.

Optionally, the first switch and the second switch are solid-state switches.

Another aspect of the present disclosure provides a system for residual current protection, which includes a power supply, a load, and a residual current circuit breaker according to one of the foregoing items.

Optionally, the load includes a plurality of illuminating devices and a plurality of drivers for driving each of the plurality of illuminating devices, respectively.

Optionally, each of the plurality of drivers provides the corresponding illuminating device with the driving power enabling the illuminating device to illuminate with a lowest illuminance, when detecting that the voltage supplied to it is lower than a predetermined voltage threshold, and the predetermined voltage threshold is a highest value of the voltage of the standby power supply.

In this way, the residual current circuit breaker according to the embodiment of the present disclosure switches the load from the power supply to the standby power supply when the residual current exceeds the predetermined threshold (also known as the setting value), so that the requirements for residual current protection can be met while the load can continue to operate with the lowest requirements to avoid unexpected secondary accidents.

### BRIEF DESCRIPTION OF THE DRAWINGS

These and/or other aspects, features and advantages of the present disclosure will become more definite and easier to understand from the following description of the embodiments taken in conjunction with the accompanying drawings, in which:
Fig. 1 is a diagram showing a system for residual current protection according to an embodiment of the present disclosure; and
Fig. 2 is a diagram showing an exemplary application of the residual current circuit breaker according to an embodiment of the present disclosure.

### DETAILED DESCRIPTION

The present disclosure will be described in detail below with reference to exemplary embodiments thereof. However, the present disclosure is not limited to the embodiments described herein, and it can be implemented in many different forms. The described embodiments are only used to make this disclosure thorough and complete, and fully convey the concept of the disclosure to those skilled in the art. Features of the described embodiments may be combined or substituted with each other unless explicitly excluded or should be excluded according to the context.

Unless otherwise defined, technical terms or scientific terms used in this disclosure shall have their ordinary meanings as understood by people with ordinary skills in the field to which this disclosure belongs. The terms "first", "second" and the like used in this disclosure do not indicate any order, quantity or importance, but are only used to distinguish different components.

As mentioned above, in some application scenarios of residual current circuit breaker, when the load suddenly stops operating as the power of it is cut off with the tripping action of the residual current circuit breaker, unexpected secondary accidents may occur. The following provides a residual current circuit breaker and a system including the residual current circuit breaker, which can meet the requirements for the residual current protection while meeting the lowest requirements for the operation of the load to avoid secondary accidents.

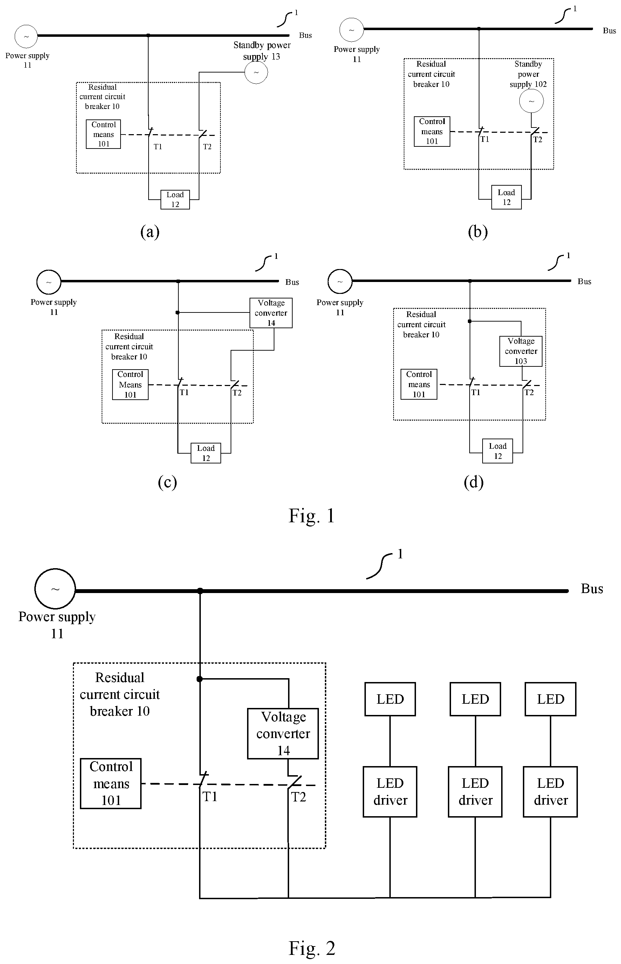

Fig. 1 is a diagram showing a system for residual current protection according to an embodiment of the present disclosure. Diagrams (a), (b), (c) and (d) in Fig. 1 respectively show four different configurations of residual current circuit breakers according to the embodiment of the present disclosure. The differences between them lie in that: in diagram (a), the standby power supply is located outside the residual current circuit breaker; in diagram (b), the standby power supply is located inside the residual current circuit breaker as a part of the residual current circuit breaker; in diagram (c), the standby power supply in diagram (a) is replaced by a voltage converter; and in diagram (d), the standby power supply in diagram (b) is replaced by a voltage converter.

Diagram (a), (b), (c) and (d) are described below, respectively.

In diagram (a), a system 1 for residual current protection according to an embodiment of the present disclosure may include a residual current circuit breaker 10, a power supply 11, a load 12 and a standby power supply 13.

The power supply 11 includes a grid power supply, a generator system, a solar power generation system, a wind power generation system, a storage battery system, a geothermal power generation system or other energy sources capable of providing electric energy to loads, or combinations thereof. The load 12 includes an illuminating device, a monitoring device, an alarm device, a fire fighting device, a medical device, or other electrical devices that need electric energy for operation, or combinations thereof. The standby power supply 13 includes a generator system, a solar power generation system, a wind power generation system, a storage battery system, a geothermal power generation system, or other energy sources, or combinations thereof, which can provide a voltage higher than the lowest value required for the operation of the load 12 and lower than the highest value of a safe voltage. The "safe voltage" here refers to a voltage range that conforms to various national, regional, international or industrial standards (for example, national standard of People's Republic of China (PRC) GB/T 3805-2008) and relevant laws and regulations and that will not cause harm to human body or animal body even if it is touched by the human body or animal body.

As shown in diagram (a), the current of the power supply 11 flows into an incoming terminal of the residual current circuit breaker 10 via a bus, and then flows into the load 12 via a main loop of the residual current circuit breaker 10. In this process, the residual current circuit breaker 10 may detect whether there is residual current in its main loop and whether the residual current exceeds a predetermined threshold I_{T} (for example, its setting value). It is well known that the residual current circuit breaker has a function of detecting residual current detection. For example, a sensor or a current transformer for measuring phase current and neutral current can be arranged in the residual current circuit breaker, and a Microcontroller Unit (MCU) of the residual current circuit breaker can determine whether there is residual current by detecting whether a vector sum of the phase current and the neutral current is zero, and further determine whether a tripping action should be performed by determining whether a magnitude difference between the phase current and the neutral current exceeds a predetermined threshold I_{T}, which need not be described in detail here so as not to obscure the disclosure.

As shown in diagram (a), the residual current circuit breaker 10 may include a first switch T1, a second switch T2 and a control means 101. The first switch T1 is connected in series between the power supply 11 and the load 12. The second switch T2 is connected in series between the standby power supply 13 and the load 12. Since the standby power supply 13 is located outside the residual current circuit breaker 10, the residual current circuit breaker 10 may further include an external interface (not shown) for connecting to the standby power supply 13, and the second switch T2 is then connected between the external interface and the load 12. The first switch T1 and the second switch T2 are mutually exclusive, that is, only one of them can be closed, which will be controlled by the control means 101 (as shown by the dotted line in this diagram). The control means 101 controls to open the first switch T1 and close the second switch T2 in response to the residual current in the main loop of the residual current circuit breaker 10 exceeding the predetermined threshold I_{T}. Otherwise, the control means 11 keeps the first switch T1 closed and the second switch T2 open. The control means 101 may be implemented in software, hardware, or a combination of software and hardware. The control means 101 may be a part of the MCU of the residual current circuit breaker 10 or may be independent of the MCU.

When no residual current is detected, or the residual current is detected but is less than the predetermined threshold I_{T}, the control means 101 keeps the first switch T1 closed and the second switch T2 open, and the power supply 11 supplies power to the load 12. When the residual current is detected and is greater than the predetermined threshold IT, the control means 101 can open the first switch T1 (i.e., trip) and close the second switch T2, so that the standby power supply 13 can supply power to the load 12. Since the value of the voltage provided by the standby power supply 13 is higher than the lowest value of the voltage required for the operation of the load 12 and lower than the highest value of the safe voltage, it is possible to keep the load 12 operating to a certain extent instead of stopping operating completely. For example, in the case where the load 12 is an illuminating system, although switching from the power supply 11 to the standby power supply 13 may lead to a decrease in the illuminance degree of the illuminating system, the illuminating system will not be completely unable to illuminate, which can especially reduce the occurrence of traffic accidents for outdoor illumination at night, for example. For another example, in the case where the load 12 is a power-consumption device with a wide voltage power supply design, switching from the power supply 11 to the standby power supply 13 will not affect the normal operation of the power-consumption device.

In this way, the residual current circuit break 10 and the system 1 including the residual current circuit break 10 according to the embodiment of the present disclosure can meet requirements for the residual current protection while meeting the lowest requirements for the operation of the load to avoid secondary accidents.

In the diagram (b), the system 1 may include a residual current circuit breaker 10 according to an embodiment of the present disclosure, a power supply 11 and a load 12.

The difference from diagram (a) is that the standby power supply 13 is located inside the residual current circuit breaker 10, that is, the residual current circuit breaker 10 includes a first switch T1, a second switch T2, a control means 101 and a standby power supply 102, and the second switch T2 is then connected between the standby power supply 102 and the load 12. The standby power supply 102 may be a storage battery pack or another energy source or a combination thereof, which can provide a voltage higher than the lowest value of the voltage required for the operation of the load 12 and lower than the highest value of the safe voltage and is conveniently arranged inside the residual current circuit breaker 10. Other configurations are the same as those shown in diagram (a) and therefore are not described here so to avoid repetition.

In the diagram (c), the system 1 may include a residual current circuit breaker 10 according to an embodiment of the present disclosure, a power supply 11, a load 12 and a voltage converter 14.

The difference from the diagram (a) is that the standby power supply 13 is replaced by a voltage converter 14. An input terminal of the voltage converter 14 is connected to the incoming terminal of the residual current circuit breaker 10 to convert the voltage of the power supply 11 into a voltage higher than the lowest value of the voltage required for the operation of the load 12 and lower than the highest value of the safe voltage. Since the voltage converter 14 is located outside the residual current circuit breaker 10, the residual current circuit breaker 10 may further include an external interface (not shown) for connecting to the voltage converter 14, and the second switch T2 is then connected between the external interface and the load 12. Other configurations are the same as those shown in diagram (a) and therefore are not described here so to avoid repetition.

In the diagram (d), the system 1 may include a residual current circuit breaker 10 according to an embodiment of the present disclosure, a power supply 11 and a load 12. That is, the residual current circuit breaker 10 includes a first switch T1, a second switch T2, a control means 101 and a voltage converter 103.

The difference from the diagram (a) is that the standby power supply 13 is replaced by a voltage converter 103 and the voltage converter 103 is located inside the residual current circuit breaker 10. An input terminal of the voltage converter 103 is connected to the incoming terminal of the residual current circuit breaker 10 to convert the voltage of the power supply 11 into a voltage higher than the lowest value of the voltage required for the operation of the load 12 and lower than the highest value of the safe voltage. The second switch T2 is then connected between an output terminal of the voltage converter 103 and the load 12. Other configurations are the same as those shown in diagram (a) and therefore are not described here so to avoid repetition.

The residual current circuit breaker 10 and the system 1 with four different configurations shown in diagrams (a) to (d) can meet both requirements for the residual current protection and the lowest requirements for the operation of the load, and one of these four configurations can be selected according to the actual application scenario. For example, when the cost of the voltage converter is lower than that of the standby power supply, it will be more beneficial to choose the residual current circuit breaker shown in diagrams (c) or (d).

In some examples, the voltage converter 14 shown in diagram (c) or the voltage converter 103 shown in diagram (d) can be designed to start the conversion operation of converting the voltage of the power supply 11 into the voltage higher than the lowest value of the voltage required for the operation of the load 12 and lower than the highest value of the safe voltage once it is powered on. In other examples, the voltage converter 14 shown in diagram (c) or the voltage converter 103 shown in diagram (d) can be designed to start the conversion operation only after receiving a trigger signal for triggering the conversion operation from the control means 101 or the MCU of the residual current circuit breaker 10. For example, the MCU of the residual current circuit breaker 10 can be programmed to send, to the voltage converter 14 or 103, a trigger signal for triggering the voltage converter 14 or 103 to perform the conversion operation once it detects that the residual current exceeds the predetermined threshold I_{T}. However, it can be understood that residual current protection is generally urgent, therefore, in order to disconnect the load 12 from the power supply 11 in time, it may be more advantageous to adopt the scheme that the voltage converter 14 or 103 starts to perform the conversion operation once it is powered on.

In some examples, the first switch T1, the second switch T2 and the control means 101 may be implemented using a dual power switch, e.g., an Automatic Transfer Switch (ATS). For example, the switch body of the ATS can be used to implement the first switch T1 and the second switch T2, and the controller of the ATS can be used to implement the control means 101. When the MCU of the residual current circuit breaker detects that the residual current exceeds the predetermined threshold I_{T}, a trigger signal for triggering the ATS to perform the conversion operation can be send to the controller of ATS. This makes the residual current circuit breaker 10 easy to implement.

In some examples, the first switch T1 and the second switch T2 may be implemented using a solid-state switch (also called a non-contact switch). The solid-state switch has the advantages of fast response, low power consumption, long life, etc., which is beneficial to application scenarios that require a short time interval between the opening of the first switch T1 and the closing of the second switch T2. For example, in an application scenario where the load 12 is a monitoring system, in order to avoid missing out critical and instantaneous monitored information, it may be required that the monitoring should not be interrupted as much as possible. If the time interval from the opening of the first switch T1 to the closing of the second switch T2 is too long (for example, hundreds or thousands of microseconds), critical monitored information may be missed out. In the case where the first switch T1 and the second switch T2 are implemented using the solid-state switch, the time interval can be as low as a few microseconds, thus avoid missing out the critical monitored information.

In some examples, the residual current circuit breaker 10 further includes a storage mean and a communication mean. The storage mean may store information related to the detected residual current, information related to the switching of the first switch T1 and the second switch T2, and the like. The communication mean can transmit the information stored by the storage mean to an external device. The external device may be, for example, a computing device of a maintenance worker or the like. The maintenance worker will use this information to analyze the causes of the residual current, and then eliminate the causes. Generally, after this the causes are eliminated, the second switch T2 is open and the first switch T1 is closed manually, so as to restore the power provision from the power supply 11 to the load.

Further, for the convenience of understanding, the application of the residual current circuit breaker 10 will be described with reference to Fig. 2, taking the illuminating system as an example. However, it should be understood that the use case of the residual current circuit breaker 10 is not limited to this, and there may be more use cases, such as the monitoring system mentioned above, which needs not be exhaustive in the present disclosure.

Fig. 2 is a diagram showing an exemplary application of the residual current circuit breaker according to an embodiment of the present disclosure.

Referring to Fig. 2, the residual current circuit breaker 10 takes the configuration shown in diagram (d) as an example, but it is not limited to this, and the configurations shown in diagrams (a) to (c) can also be used.

As shown, the load 12 includes a plurality of illuminating devices (such as LED street lamps) and a plurality of drivers (such as LED drivers) for driving each of the plurality of illuminating devices, respectively. Each of the drivers provides, to a corresponding illuminating device, driving power which enables the illuminating device to illuminate with the lowest illuminance, when detecting that the voltage supplied to it is lower than a predetermined voltage threshold V_{T}. The predetermined voltage threshold V_{T} may be the highest value of the voltage provided by the voltage converter 103 (or the voltage converter 14 or the standby power supply 13 or 102).

With respect to the example of Fig. 2, when the residual current is not detected or is detected but is less than the predetermined threshold I_{T}, the control means 101 keeps the first switch T1 closed and the second switch T2 open. A plurality of LED street lamps are powered by the power supply 11. For example, the voltage of the power supply 11 is 220Vac, so that each LED street lamp operates at its rated power, providing normal illuminance. When the residual current is detected and is greater than the predetermined threshold I_{T}, the control means 101 controls to open the first switch T1 and close the second switch T2. The plurality of LED street lamps are powered by the voltage converter 103. For example, the voltage converter 103 converts the voltage of the power supply 11 from 220Vac to 50Vac. When each driver detects that the power supply voltage is lower than 50Vac (including 50Vac and below), it will provide its corresponding LED street lamp with driving power that can make the LED street lamp illuminates with the lowest illumination. For example, the driving power provided can be 1/10, 1/5 or other proportions of its rated power. In this way, although the illuminance of the LED street lamp has decreased, the LED street lamp will not be completely unable to illuminate. For example, in the case of outdoor illumination at night, it can effectively avoid traffic accidents caused by pedestrians, animals or vehicles being completely invisible.

The foregoing describes the residual current circuit breaker according to the embodiment of the present disclosure, which is convenient to manufacture, easy to implement and low in cost. In addition to providing the functions provided by the traditional residual current circuit breaker, it can also keep the load operating to a certain extent after tripping, thus avoiding unexpected secondary accidents.

The block diagram involved in this disclosure is not intended to require or imply that the connections and arrangements must be made in the manner shown in the block diagram. It should be understood by those skilled in the art that the above-mentioned specific embodiments are only examples rather than limitations, and various modifications, combinations, partial combinations and substitutions can be made to the embodiments of the disclosure according to design requirements and other factors, as long as they are within the scope of the appended claims or their equivalents, they belong to the scope to be protected by this disclosure.

## Claims

1. A residual current circuit breaker, comprising:
a first switch, connected in series between a power supply of the residual current circuit breaker and a load;
a second switch, connected in series between a standby power supply and the load; and
a control means, configured to control to open the first switch and close the second switch in response to residual current of a main loop of the residual current circuit breaker exceeding a predetermined threshold,
wherein a voltage of the standby power supply is higher than a lowest value of a voltage required for the load to operate and lower than a highest value of a safe voltage, and
wherein the first switch and the second switch are mutually exclusive.

2. The residual current circuit breaker according to claim 1, wherein the standby power supply is located outside the residual current circuit breaker, and the residual current circuit breaker further comprises:
an external interface for connecting to the standby power supply, and
wherein the second switch is connected between the external interface and the load.

3. The residual current circuit breaker according to claim 1, wherein,
the standby power supply is located inside the residual current circuit breaker as a part of the residual current circuit breaker.

4. The residual current circuit breaker according to claim 2 or 3, wherein,
the standby power supply is provided by a voltage converter, and an input terminal of the voltage converter is connected to an incoming terminal of the residual current circuit breaker to convert a voltage of the power supply into a voltage higher than the lowest value of the voltage required for the load to operate and lower than the highest value of the safe voltage, and
the second switch is connected between an output terminal of the voltage converter and the load.

5. The residual current circuit breaker according to claim 4, wherein,
the voltage converter performs conversion in response to receiving a trigger signal for triggering the voltage converter to perform the conversion.

6. The residual current circuit breaker according to claim 1, wherein,
the first switch, the second switch and the control means are provided by a dual power switch.

7. The residual current circuit breaker according to claim 1, wherein,
the first switch and the second switch are solid-state switches.

8. A system for residual current protection, comprising:
a power supply;
a load; and
the residual current circuit breaker according to any one of claims 1 to 7.

9. The system according to claim 8, wherein,
the load includes a plurality of illuminating devices and a plurality of drivers for driving each of the plurality of illuminating devices, respectively.

10. The system according to claim 9, wherein,
each of the plurality of drivers provides the corresponding illuminating device with a driving power enabling the illuminating device to illuminate with a lowest illuminance, when detecting that a voltage supplied to it is lower than a predetermined voltage threshold, and
the predetermined voltage threshold is a highest value of the voltage of the standby power supply.
